(19) Europäisches Patentamt
European Patent Office
Office européen des brevets

(11) **EP 0 907 048 B1**

(12) **EUROPÄISCHE PATENTSCHRIFT**

(45) Veröffentlichungstag und Bekanntmachung des Hinweises auf die Patenterteilung:
**03.07.2002   Patentblatt 2002/27**

(51) Int Cl.[7]: **F16K 31/363**

(21) Anmeldenummer: **98118199.3**

(22) Anmeldetag: **25.09.1998**

(54) **Eigenmediumbetätigbares Absperrventil**

Valve actuated by the controlled fluid

Soupape actionnée par le fluide contrôlé

(84) Benannte Vertragsstaaten:
**CH DE FR LI SE**

(30) Priorität: **01.10.1997   DE 19743550**

(43) Veröffentlichungstag der Anmeldung:
**07.04.1999   Patentblatt 1999/14**

(73) Patentinhaber: **Framatome ANP GmbH**
**91050 Erlangen (DE)**

(72) Erfinder:
• **Conrads, Hermann-Josef, Dipl.-Ing. (FH)**
**91074 Herzogenaurach (DE)**
• **Model, Jürgen, Dipl.-Ing.**
**91056 Erlangen (DE)**
• **Laurer, Erwin, Dipl.-Ing. (FH)**
**91096 Möhrendorf (DE)**

(74) Vertreter: **Tergau & Pohl Patentanwälte**
**Mögeldorfer Hauptstrasse 51**
**90482 Nürnberg (DE)**

(56) Entgegenhaltungen:
| | |
|---|---|
| EP-A- 0 124 821 | DD-A- 201 482 |
| DE-A- 4 012 900 | DE-A- 19 601 856 |
| US-A- 2 622 621 | US-A- 3 131 722 |
| US-A- 4 239 180 | US-A- 4 589 627 |

**Beschreibung**

Die Erfindung betrifft ein eigenmediumbetätigbares Absperrventil mit einem in einem Ventilinnenraum angeordneten Absperrkörper und Ventilsitz, wobei der Absperrkörper über eine Kolbenstange mit einem in einem Zylinder geführten Kolben verbunden ist. Ein derartiges Absperrventil ist z.B. aus der EP-A-124 821 bekannt.

Aus der DD-PS 201 482 ist ein pneumatischer Stellantrieb bekannt, dessen Kolben sowohl eine radial angeordnete, bewegte Abdichtung als auch eine axial angeordnete, statisch wirkende Plansitzdichtung aufweist. Durch die Plansitzdichtung ist der Kolben in der druckbeaufschlagten Endstellung mit seiner dem Druckraum abgekehrten Stirnfläche gegenüber der Stirnseite des Gehäuses abgedichtet. Durch diese Anordnung wird sowohl eine gute Gleiteigenschaft als auch eine sichere Abdichtung in der druckbeaufschlagten Endstellung des Kolbens gewährleistet.

Aus der US-PS 4,239,180 ist ein fremdmediumbetätigtes, kraftausgeglichenes Druckluftventil bekannt, bei dem ein Kolben sowohl an seiner Mantelfläche, d.h. radial, als auch an seiner Stirnseite, d.h. axial, eine Dichtung aufweist.

Eigenmediumbetätigbare Absperrventile unterscheiden sich von fremdmediumbetätigbaren Absperrventilen dadurch, daß die zum Absperren erforderliche Kraft im wesentlichen aus dem Betriebsdruck eines Arbeitsmediums (z.B. Frischdampf) erzeugt wird, d. h. aus dem Druck, gegen den abgesperrt werden soll. Ein eigenmediumbetätigbares Absperrventil wird beispielsweise als Frischdampf-Absperrventil in einem Kernkraftwerk eingesetzt.

In der deutschen Offenlegungsschrift DE 196 01 856 A1 ist ein eigenmediumbetätigbares Eckventil mit einem Dämpfungsmechanismus beschrieben, der bewirkt, daß der Ventilkegel sowohl beim Öffnungs- als auch beim Schließvorgang gedämpft in seine jeweilige Endlage bewegt wird.

Aus der Europäischen Patentschrift 0 124 821 B1 ist ein weiteres eigenmediumbetätigbares Absperrventil bekannt, das einen in einem Zylinder geführten Kolben aufweist. Der Kolben ist über eine in einem zweiten Zylinder geführte Kolbenstange mit einem Absperrkörper verbunden. Durch den Kolben ist im Zylinder ein erster Raum und ein zweiter Raum gebildet, zwischen welchen eine Steuerdruckdifferenz zur Erzeugung einer Stellkraft herstellbar ist. Diese Stellkraft wird über die Kolbenstange auf den Absperrkörper übertragen, so daß durch die Steuerdruckdifferenz das Ventil von einem geschlossenen in einen offenen Zustand oder von einem offenen in einen geschlossenen Zustand gebracht werden kann.

Aus dem Fachartikel von E. Laurer, "Absperr-Sicherheitsventil im Frischdampf-System des KKW Grafenrheinfeld", in HERION-Informationen 1/86, Energie- und Prozeßtechnik, S. 26 f, ist ein Absperrventil für eine Frischdampfleitung in einem Kernkraftwerk bekannt. Bei diesem eigenmediumbetätigten Absperrventil sind zur Erzeugung der Steuerdruckdifferenz Steuerbohrungen in dem Absperrventil vorgesehen, durch die der erste und der zweite Raum mit je einem gewünschten Steuerdruck beaufschlagbar ist. Dem ersten Raum ist durch eine Auffüllbohrung Arbeitsmedium aus dem abzusperrenden Ventilinnenraum zuführbar, wodurch dieser erste Raum mit einem hohen Druck beaufschlagbar ist. Bekannt ist aus der genannten Schrift ebenfalls, den zweiten Raum über eine Entlastungsbohrung im Druck zu entlasten.

Ein Nachteil dieses Ventils besteht darin, daß im geschlossenen Zustand, d.h. bei am Ventilsitz anliegendem Absperrkörper, ein Leckstrom aus dem Ventilinnenraum über die Steuerbohrungen in die umgebende Atmosphäre austritt. Der Leckstrom führt insbesondere aus dem Ventilinnenraum über die Auffüllbohrung in den ersten Raum, von dort am Kolben vorbei in den zweiten Raum und von dort über die Entlastungsbohrung in die Atmosphäre.

Ein anderer Nachteil des genannten Ventils liegt darin, daß es in bestimmten Betriebszuständen nicht mehr in geschlossenem Zustand gehalten werden kann, sobald der Betriebsdruck des Arbeitsmediums unter einen bestimmten Grenzdruck fällt. Das Absperrventil öffnet dann unerwünscht.

Der Betriebsdruck ist derjenige Druck, gegen den das Ventil absperren soll. In einer verallgemeinerten Situation ist der Absperrkörper beidseitig mit je einem Druck beaufschlagt. Der Betriebsdruck ist dann die Druckdifferenz zwischen den von dem Absperrkörper abgesperrten Räumen. Aus den unterschiedlichen Drücken resultiert in Abhängigkeit von der Größe der jeweils druckbeaufschlagten Querschnittsfläche des Absperrkörpers eine auf den Absperrkörper wirkende Betriebskraft.

Aufgabe der Erfindung ist es, ein eigenmediumbetätigbares Absperrventil anzugeben, bei dem ein Leckstrom zur umgebenden Atmosphäre vermieden ist und das zudem auch noch bei sehr kleinem auf den Absperrkörper wirkenden Betriebsdruck schließbar bleibt, unabhängig davon, ob der Betriebsdruck den Absperrkörper gegen den Ventilsitz drückt oder von diesem wegdrückt.

Diese Aufgabe wird gemäß der Erfindung bei dem eingangs genannten Absperrventil gelöst durch eine zwischen dem Kolben und dem Zylinder angeordnete Dichtung, die nur bei am Ventilsitz anliegendem Absperrkörper den Kolben gegen den Zylinder abdichtet, wobei der Durchmesser einer von den Auflagepunkten der Dichtung umschlossenen Fläche größer als der Durchmesser des Ventilsitzes ist.

Als Auflagepunkte der Dichtung sind dabei diejenigen Berührpunkte zwischen der Dichtung und dem Zylinder bzw. zwischen der Dichtung und dem Kolben zu verstehen, die nur bei einem Wirksamwerden der Dichtung, d.h. bei am Ventilsitz anliegendem Absperrkörper, berührt werden.

Bei am Ventilsitz anliegendem Absperrkörper sperrt das Ventil den Fluß des Arbeitsmediums ganz oder teilweise ab.

Die Dichtung des Absperrventils wirkt statisch, d.h. bei ruhenden Dichtflächen. Damit läßt sich in vorteilhafter Weise eine sehr hohe Dichtwirkung zwischen dem Kolben und dem Zylinder des eigenmediumbetätigbaren Absperrventils erzielen, die deutlich höher ist als die Dichtwirkung von üblicherweise am Kolben angebrachten Kolbenringen zur dynamischen Abdichtung des Kolbens gegenüber dem Zylinder (gleitende Dichtflächen). Das eigenmediumbetätigbare Absperrventil nach der Erfindung weist im geschlossenen Zustand, d. h. bei am Ventilsitz anliegendem Absperrkörper, eine deutlich - gegenüber bekannten eigenmediumbetätigbaren Absperrventilen - erhöhte Dichtigkeit zwischen dem Kolben und dem Zylinder auf. Dadurch werden Leckströme zur umgebenden Atmosphäre vermieden.

Die erhöhte Dichtigkeit bewirkt in Verbindung mit dem größer als der Ventilsitzdurchmesser ausgebildeten Dichtungsdurchmesser auch, daß zwischen dem ersten Raum und dem zweiten Raum, die von dem Kolben in dem Zylinder gebildet sind, eine erhöhte Steuerdruckdifferenz erzeugt werden kann. Das Absperrventil ist folglich in allen Betriebszuständen auch dann noch geschlossen haltbar, falls die auf den Absperrkörper wirkende -aus der Betriebsdruckdifferenz resultierende-Betriebskraft gegen Null geht. Das Absperrventil bleibt selbst dann noch schließbar, falls die Betriebsdruckdifferenz unter 5 bar fällt oder ein druckloser Zustand auftritt. Dies gilt auch in dem Fall, daß die Betriebskraft den Absperrkörper von dem Ventilsitz wegdrücken würde, falls keine betragsmäßig gleich große, entgegengesetzt gerichtete Stellkraft vorhanden wäre.

Nach einer vorteilhaften Ausgestaltung des Absperrventils ist die Dichtung an einer Stirnseite des Kolbens befestigt. In diesem Fall ist die Dichtung mit dem Kolben mitbeweglich.

Nach einer besonders bevorzugten Ausgestaltung des Absperrventils ist die Dichtung an einer Stirnseite des Zylinders befestigt. Ein derart ausgestaltetes Absperrventil ist besonders störunanfällig, da ein Abreißen einer der Befestigung der Dichtung dienenden Einrichtung nicht automatisch zu einer Ortsveränderung der Dichtung führt, zumindest in dem bevorzugten Fall, daß die Dichtung an der bezüglich der Gravitationskraft unten gelegenen Stirnseite des Zylinders befestigt ist.

Ist die Dichtung speziell an einer bezüglich der Gravitationskraft unteren Stirnseite des Zylinders befestigt, so ergibt sich ein zusätzlicher Vorteil dadurch, daß zwischen der Dichtung und der Zylinderlängsseite ein Hohlraum gebildet ist, der eventuellen Abrieb der Kolbenringe und/oder der von den Kolbenringen berührten Dichtfläche am Zylinder aufnimmt.

Beispielsweise ist die Dichtung elastisch verformbar. Dadurch wird erreicht, daß die Dichtung ein Anliegen des Absperrkörpers am Ventilsitz nicht behindert.

Die Dichtung ist bevorzugt derart elastisch verformbar, daß das Gewicht der beweglichen Einbauten des Absperrventils zum notwendigen Anpressen der Dichtung an die Stirnseite des Zylinders ausreicht. Die beweglichen Teile umfassen beispielsweise den Kolben und eine Kolbenstange.

Beispielsweise weist die Dichtung eine Dichtlippe auf. Dadurch ist die Dichtung sowohl besonders gut elastisch verformbar ausführbar als auch gegenüber sehr hohen Drücken widerstandsfähig, ohne daß ihre Elastizitätsgrenze überschritten wird. Die Dichtlippe ist z.B. zu der Seite mit dem höheren Steuerdruck hin ausgerichtet, damit dieser Druck - auf die Lippe wirkend - die Dichtlippe anpreßt und dadurch die eigentliche Dichtkraft erzeugt oder die Dichtkraft vergrößert.

Die Dichtlippe ist vorzugsweise aus Metall gefertigt.

Die Dichtung ist vorzugsweise rotationssymmetrisch bezüglich der Zylinderachse ausgestaltet.

Zwei Ausführungsbeispiele eines Absperrventils nach der Erfindung werden anhand der Figuren 1 bis 4 näher erläutert. Es zeigen

FIG 1     ein an sich bekanntes Absperrventil in geöffnetem Zustand,

FIG 2     das Absperrventil aus Figur 1 in geschlossenem Zustand,

FIG 3     ein erstes Ausführungsbeispiel eines Absperrventils nach der Erfindung, wobei nur ein Ausschnitt gezeigt ist, der dem in Figur 2 angedeuteten Ausschnitt entspricht,

FIG 4     ein zweites Ausführungsbeispiel eines Absperrventils nach der Erfindung, wobei ausschließlich ein Teilbereich näher dargestellt ist, der dem in Figur 2 markierten Ausschnitt entspricht.

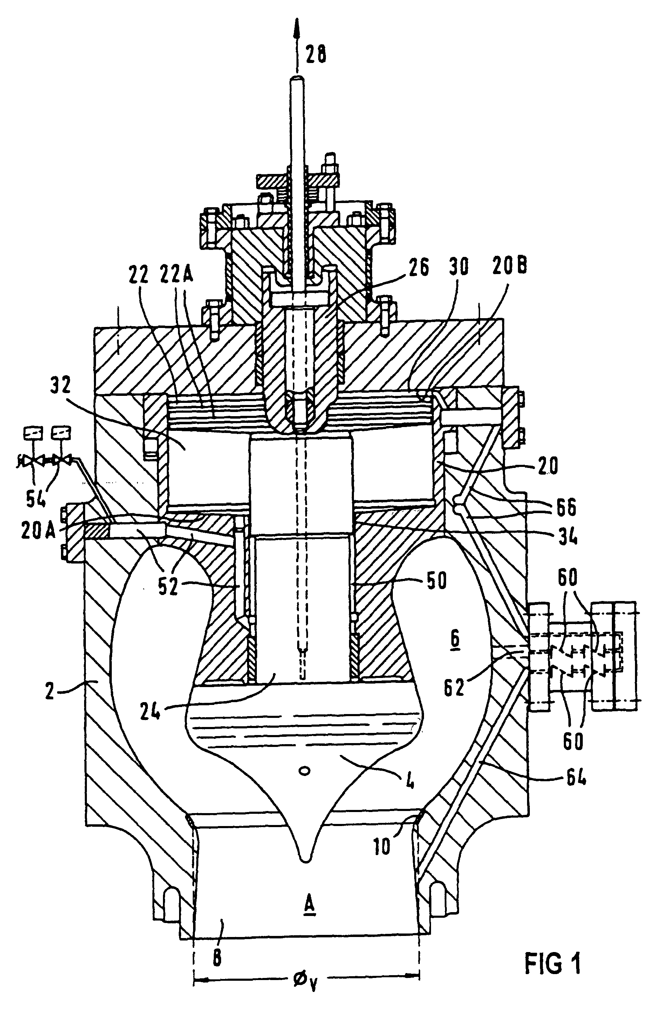

Figur 1 zeigt ein eigenmediumbetätigbares Absperrventil, bei dem in einem Gehäuse 2 ein Absperrkörper 4 zum Absperren eines Ventilinnenraums 6 gegenüber einem Ausblasestutzen 8 vorgesehen ist, in geöffnetem Zustand. In diesem Zustand kann ein Arbeitsmedium A aus dem Ventilinnenraum 6 zum Ausblasestutzen 8 hin fließen oder aber in umgekehrter Richtung.

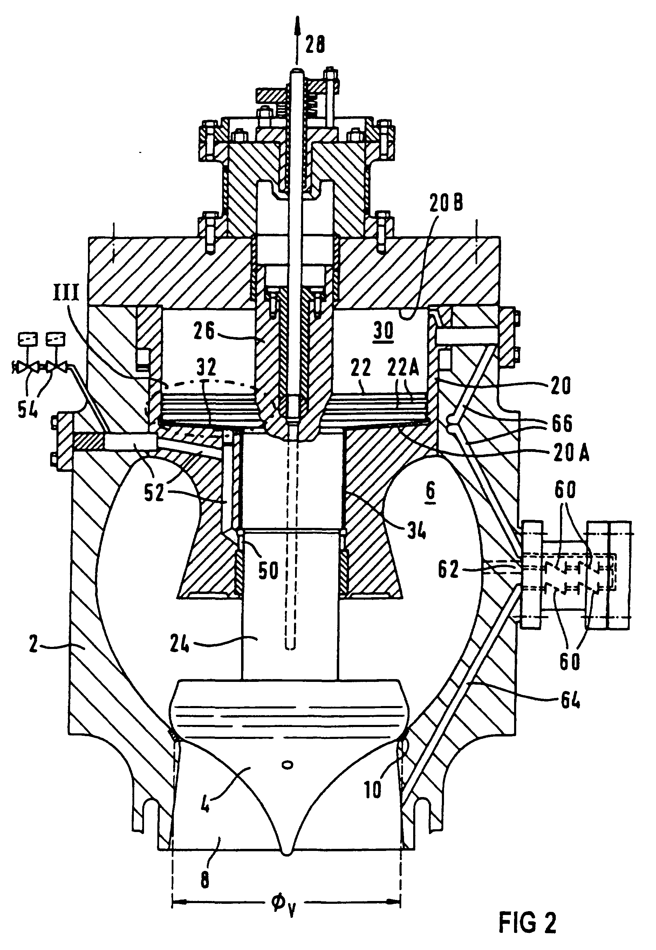

Im geschlossenen Zustand, der in Figur 2 dargestellt ist, ist der Absperrkörper 4 nach unten bewegt und liegt an einem Ventilsitz 10 an dem Gehäuse 2 auf. In diesem Zustand ist der Fluß des Arbeitsmediums A unterbrochen und das Absperrventil sperrt gegenüber dem Betriebsdruck ab - das ist in dem veranschaulichten Fall ein zugangsseitiger Betriebsdruck $p_1$ des Arbeitsmediums A. Der auslaßseitige Betriebsdruck $p_2$ im Ausblasestutzen 8 ist ungefähr null, so daß die Betriebsdruckdifferenz $\Delta p_B = p_1 - p_2$ in etwa gleich dem zugangs-

seitigen Betriebsdruck $p_1$ ist. Die Betriebskraft K ergibt sich deshalb durch die folgende Formel aus dem Durchmesser $\varnothing_V$ des Ventilsitzes 10:

$$K = p_1 \cdot \pi \cdot (\varnothing_V/2)^2$$

Diese Kraft drückt den Absperrkörper 4 gegen den Ventilsitz 10.

In den Figuren 1 und 2 ist der Absperrkörper 4 mit einem in einem Zylinder 20 geführten Kolben 22 über eine erste Kolbenstange 24 verbunden. Über eine zweite Kolbenstange 26 wirkt ein pneumatisches Offenhaltesystem 28 auf den Kolben 22. Der Zylinder 20 umfaßt zwei Stirnseiten 20A, 20B und eine runde, zylinderförmige Längsseite.

Durch den Kolben 22 wird in dem Zylinder 20 ein erster Raum 30 und ein zweiter Raum 32 gebildet. Das Volumen eines dieser Räume 30,32 wird in der jeweiligen Endposition des Kolbens 22 sehr klein.

Über einen Drosselspalt 34 ist der zweite Raum 32 mit einem Entlastungsraum 50 sehr kleinen Volumens verbunden. Von diesem führt eine Entlastungsbohrung 52 über ein Magnetventil 54 zur umgebenden Atmosphäre.

Der erste Raum 30 ist mittels der Rückschlagventile 60 gesteuert mit einem ersten Steuerdruck $p_o$ beaufschlagbar. Dieser Druck kann wahlweise dem Ventilinnenraum 6 über eine zugangsseitige Bohrung 62 oder dem Ausblasestutzen 8 über eine auslaßseitige Bohrung 64 entnommen werden. Über die Rückschlagventile 60 ist nämlich entweder die zugangsseitige Bohrung 62 oder die auslaßseitige Bohrung 64 mit einer Auffüllbohrung 66 verbindbar, die in dem ersten Raum 30 mündet. Die mit dem Ventilinnenraum 6 verbundene zugangsseitige Bohrung 62 führt in Figur 1 und 2 aus der Zeichenebene heraus und ist deshalb nicht voll, d.h. nur angedeutet, ersichtlich.

Im Normalbetrieb ist das Absperrventil geöffnet. Ein Schließen ist sowohl in dem Fall möglich, daß ein Betriebsdruckgradient, bzw. eine resultierende Betriebskraft K, in Richtung von dem Ventilinnenraum 6 (großer zugangsseitiger Betriebsdruck $p_1$) zum Ausblasestutzen 8 besteht als auch in dem Fall eines Betriebsdruckgradienten, bzw. einer resultierenden Betriebskraft, vom Ausblasestutzen 8 (großer auslaßseitiger Betriebsdruck $p_2$) zum Ventilinnenraum 6.

Der erstgenannte Fall ist der in Fig. 2 näher dargestellte, bei dem der Ventilinnenraum 6 mit dem zugangsseitigen Betriebsdruck $p_1$ beaufschlagt ist, gegen den das Ventil absperren soll. Im diesem Fall wird der erste Raum 30 über die zugangsseitige Bohrung 62 und die Auffüllbohrung 66 mit einem ersten Steuerdruck $p_o$ beaufschlagt.

Der zweitgenannte Fall ist nicht gesondert gezeichnet. In diesem zweiten Fall geschieht das Druckbeaufschlagen (erster Steuerdruck $p_o$) des ersten Raumes 30 über die auslaßseitige Bohrung 64 und die Auffüllbohrung 66.

In beiden Fällen wird gleichzeitig mit der Druckbeaufschlagung ($p_o$) des ersten Raumes 30 der zweite Raum 32 über den Drosselspalt 34 und die Entlastungsbohrung 52 druckentlastet auf einen zweiten Steuerdruck $p_u$ ($p_u \approx 0$).

In beiden Fällen wird durch die so erzeugte Druckdifferenz, eine sog. Steuerdruckdifferenz $\Delta p_s = p_o - p_u$, der Kolben 22 von seiner oberen Endposition im Zylinder 20 zu einer unteren Endposition bewegt und dadurch der Absperrkörper 4 gegen den Ventilsitz 10 gedrückt. Die aus dem Betriebsdruck, z.B. aus dem zugangsseitigen Betriebsdruck $p_1$, erzeugte Steuerdruckdifferenz $\Delta p_s$ ist aufgrund von Verlusten in den Ventilen und Steuerbohrungen geringfügig kleiner als der Betriebsdruck.

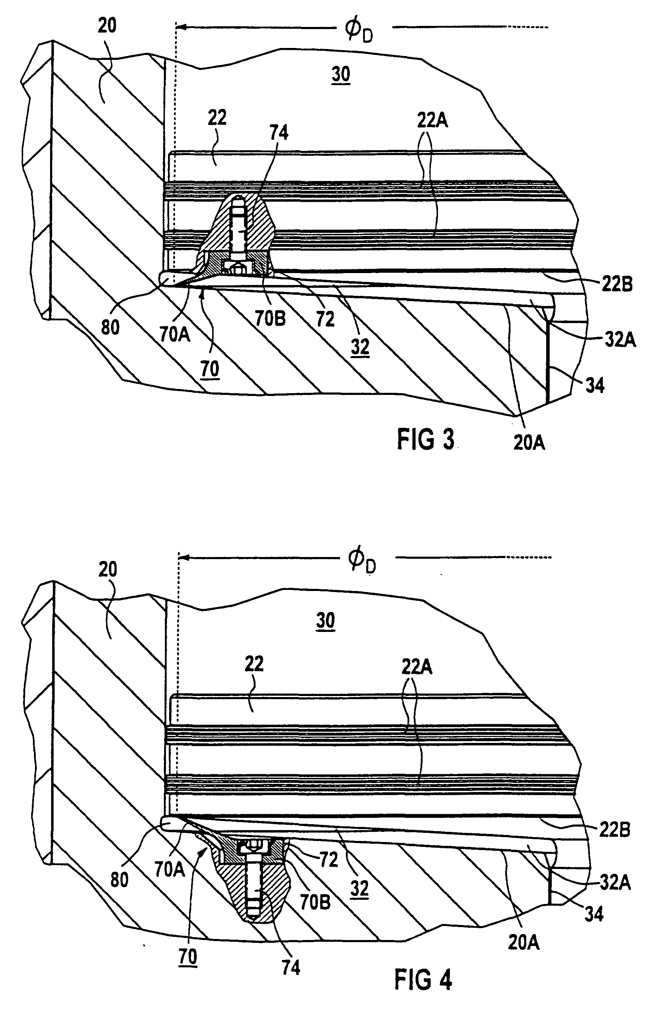

Zur Abdichtung des ersten Raumes 30 gegenüber dem zweiten Raum 32 sind Kolbenringe 22A am Kolben 22 vorgesehen, die auch während der Bewegung des Kolbens 22 wirken. Die Dichtwirkung derartiger Kolbenringe 22A ist begrenzt. Deshalb tritt in der unteren Endposition des Kolbens 22 ein Leckstrom von dem ersten Raum 30 zum zweiten Raum 32 und über die geschilderte Entlastungsbohrung 52 hin zur Atmosphäre auf. Dieser Leckstrom ist bei den in den Figuren 3 und 4 gezeigten Ausführungsbeispielen eines Absperrventils nach der Erfindung unterbunden.

Bevor auf die Figuren 3 und 4 näher eingegangen wird, wird ein anderer Nachteil der in den Figuren 1 und 2 gezeigten bekannten Absperrventile erläutert:

In dem ersten Fall eines Betriebsdruckgradienten vom Ventilinnenraum 6 zum Ausblasestutzen 8 ($p_1 > p_2$, $p_2 \approx 0$) ist die Gesamtkraft, mit der der Absperrkörper 4 gegen den Ventilsitz 10 gedrückt wird, groß und das Ventil immer gut schließbar. In diesem Falle erzeugen nämlich der im Ventilinnenraum 6 wirkende Betriebsdruck $p_1$ eine resultierende Betriebskraft K sowie die zwischen dem ersten Raum 30 und dem zweiten Raum 32 wirkende Steuerdruckdifferenz $\Delta p_s$ eine Stellkraft S, die in die gleiche Richtung gerichtet sind, und zwar in Richtung auf den Ventilsitz 10 nach unten. Die Steuerdruckdifferenz $\Delta p_s$, bzw. der erste Steuerdruck $p_o$, ist in diesem Falle im wesentlichen über die Auffüllbohrung 66 und die zugangsseitige Bohrung 62 aus dem Ventilinnenraum 6 abgeleitet.

Dagegen wirken im zweiten Falle eines Betriebsdruckgradienten aus dem Ausblasestutzen 8 in den Ventilinnenraum 6 ($p_1 < p_2$, $p_1 \approx 0$) die genannte Absperr- bzw. Stellkraft in unterschiedliche Richtungen und es resultiert nur eine kleine Gesamtkraft. Während der im Ausblasestutzen 8 wirkende auslaßseitige Betriebsdruck $p_2$ eine nach oben gerichtete Kraft auf den Absperrkörper 4 ausübt, bewirkt die Steuerdruckdifferenz $\Delta ps$ eine nach unten gerichtete Kraft. Damit trotzdem eine Gesamtkraft in Richtung auf den Ventilsitz 10 resultiert, ist der Durchmesser des Kolbens 22 größer als der Durchmesser $\varnothing_V$ des Ventilsitzes 10. Dieser Vergrößerung sind aber konstruktiv Grenzen gesetzt. Infolge der mangelhaften Abdichtung des ersten Raumes 30 gegenüber dem zweiten Raum 32 durch die Kolbenringe 22A am Kolben 22 bleibt der zweite Raum 32 -trotz der Druckentlastung über die Entlastungsbohrung 52- nicht drucklos ($p_u$>0), wodurch die von dem Kolben 22 auf den Absperrkörper 4 übertragene Stellkraft S in Richtung auf den Ventilsitz 10 weiter geschmälert wird. In der Praxis führt dies dazu, daß das beschriebene Absperrventil bereits bei einem auslaßseitigen Betriebsdruck $p_2$ von etwa 5 bar im Ausblasestutzen 8 nicht mehr geschlossen gehalten werden kann.

Bei den in den Figuren 3 und 4 gezeigten Ausführungsbeispielen eines Absperrventils nach der Erfindung ist auch dieses Problem gelöst. Die Figuren zeigen jeweils lediglich einen Ausschnitt des Absperrventils, der in etwa dem in Figur 2 angedeuteten Ausschnitt entspricht. Es sind ausschließlich erfindungsrelevante Details in dem Ausschnitt dargestellt.

Bei dem in Figur 3 dargestellten Beispiel ist eine Dichtung 70 an der Stirnseite 22B des Kolbens 22 befestigt. Die Dichtung 70 weist eine Dichtlippe 70A auf. Ein Dichtring 70B ist in einer Nut 72 im Kolben 22 mittels einer Schraube 74 befestigt. Im abdichtenden Zustand liegt die Dichtlippe 70A an Auflagepunkten an der unteren Stirnseite 20A des Zylinders 20 auf, die eine Fläche mit einem Durchmesser $\varnothing_D$ aufweist, der größer ist als der Durchmesser $\varnothing_V$ des Ventilsitzes 10. Anders ausgedrückt heißt das, daß von der Dichtlippe 70A in dem zweiten Raum 32 ein abgedichteter Teil 32A des zweiten Raumes 32 gebildet ist, der einen maximalen Durchmesser $\varnothing_D$ aufweist, der größer ist als der Durchmesser $\varnothing_V$ des Ventilsitzes 10.

In dem in Figur 4 dargestellten Beispiel ist die Dichtung 70 an der unteren Stirnseite 20A des Zylinders 20 befestigt. Im abdichtenden Zustand liegt die Dichtlippe 70A an Auflagepunkten an der unteren Stirnseite 22B des Kolbens 22 auf, die eine Fläche einschließen mit einem Durchmesser $\varnothing_D$, der größer als der Durchmesser $\varnothing_V$ des Ventilsitzes 10 ist.

Zwischen der Dichtlippe 70A und der Zylinderlängsseite ist ein Sammelraum 80 gebildet, in dem sich der Abrieb der Kolbenringe 22A und des Zylinders 20 ansammeln kann, ohne den Betrieb des Absperrventils zu stören.

**Patentansprüche**

1. Eigenmediumbetätigbares Absperrventil mit einem in einem Ventilinnenraum (6) angeordneten Absperrkörper (4) und Ventilsitz (10), wobei der Absperrkörper (4) über eine Kolbenstange (24) mit einem in einem Zylinder (20) geführten Kolben (22) verbunden ist,
**gekennzeichnet durch** eine zwischen dem Kolben (22) und dem Zylinder (20) angeordnete Dichtung (70), die nur bei am Ventilsitz (10) anliegendem Absperrkörper (4) den Kolben (22) gegen den Zylinder (20) abdichtet, wobei der Durchmesser ($\varnothing_D$) einer von den Auflagepunkten der Dichtung (70) umschlossenen Fläche größer als der Durchmesser ($\varnothing_V$) des Ventilsitzes (10) ist.

2. Absperrventil nach Anspruch 1,
**dadurch gekennzeichnet, daß** die Dichtung (70) an einer Stirnseite (22B) des Kolbens (22) befestigt ist.

3. Absperrventil nach Anspruch 1,
**dadurch gekennzeichnet, daß** die Dichtung (70) an einer Stirnseite (20A, 20B) des Zylinders (20) befestigt ist.

4. Absperrventil nach einem der Ansprüche 1 bis 3,
**dadurch gekennzeichnet, daß** die Dichtung (70) elastisch verformbar ist.

5. Absperrventil nach einem der Ansprüche 1 bis 4,
**dadurch gekennzeichnet, daß** die Dichtung (70) eine Dichtlippe (70A) aufweist.

**Claims**

1. Shut-off valve that can be actuated by the internal medium having a shut-off body (4), which is arranged in an interior space (6) of the valve, and valve seat (10), with the shut-off body (4) being connected, by way of a piston rod (24), to a piston (22) that is guided in a cylinder (20), **characterized by** a seal (70) that is arranged between the piston (22) and the cylinder (20) and which seals the piston (22) with respect to the cylinder (20) only when the shut-off body (4) rests against the valve seat (10), with the diameter ($\varnothing_D$) of a surface that is enclosed by the points of support of the seal (70) being greater than the diameter ($\varnothing_V$) of the valve seat (10).

2. Shut-off valve according to claim 1, **characterized in that** the seal (70) is secured to an end face (22B) of the piston (22).

3. Shut-off valve according to claim 1, **characterized in that** the seal (70) is secured to an end face (20A, 20B) of the cylinder (20).

4. Shut-off valve according to one of claims 1 to 3, **characterized in that** the seal (70) can be deformed elastically.

5. Shut-off valve according to one of claims 1 to 4, **characterized in that** the seal (70) has a sealing lip (70A).

**Revendications**

1. Soupape d'arrêt actionnée par le fluide contrôlé, comprenant un obturateur (4) disposé dans une chambre (6) intérieure de soupape et un siège (10) de soupape, l'obturateur (4) étant relié par l'intermédiaire d'une tige (24) de piston à un piston (22) guidé dans un cylindre (20),
   **caractérisée par** une garniture (70) d'étanchéité, disposée entre le piston (22) et le cylindre (20) et ne rendant étanche le piston (22) vis-à-vis du cylindre (20) que lorsque l'obturateur (4) est appliqué au siège (10) de soupape, le diamètre ($\varnothing_D$) d'une surface entourée par les points d'appui de la garniture (70) d'étanchéité étant plus grand que le diamètre ($\varnothing_V$) du siège (10) de soupape.

2. Soupape d'arrêt suivant la revendication 1,
   **caractérisée en ce que** la garniture (70) d'étanchéité est fixée sur un côté (22B) frontal du piston (22).

3. Soupape d'arrêt suivant la revendication 1,
   **caractérisée en ce que** la garniture (70) d'étanchéité est fixée sur un côté (20A, 20B) frontal du cylindre (20).

4. Soupape d'arrêt suivant l'une des revendications 1 à 3,
   **caractérisée en ce que** la garniture (70) d'étanchéité est déformable élastiquement.

5. Soupape d'arrêt suivant l'une des revendications 1 à 4,
   **caractérisée en ce que** la garniture (70) d'étanchéité a une lèvre (70A) d'étanchéité.

FIG 1

FIG 2

FIG 3

FIG 4